# EUROPÄISCHE PATENTANMELDUNG

(11) **EP 2 815 907 A2**
(43) Veröffentlichungstag der Anmeldung: **24.12.2014**
(21) Anmeldenummer: 14002032.2
(22) Anmeldetag: 12.06.2014
(51) Int. Cl.: B60H 1/00, B60H 1/24, B60J 9/00, E02F 9/00

(54) **Kabine für eine Landmaschine**

(30) Priorität: 17.06.2013 AT 4822013
(71) Anmelder: Traktorenwerk Lindner Gesellschaft m.b.H., 6250 Kundl (AT)
(72) Erfinder: Lindner, Stefan, 6250 Kundl (AT)
(74) Vertreter: Gangl, Markus

(57) **Zusammenfassung**

Kabine für eine Landmaschine, insbesondere einen Traktor, mit einer Tür (2) und einer Öffnungsvorrichtung (3), insbesondere einem öffenbaren Fenster, wobei ein Sensor zur Detektion der Stellung der Tür (2) sowie ein mit dem Sensor (4) verbundener Aktuator (5) zur Betätigung der Öffnungsvorrichtung (3) vorgesehen ist, wobei der Aktuator (5) derart ausgebildet ist, dass er die Öffnungsvorrichtung (3) öffnet, wenn der Sensor (4) eine offene Stellung der Tür (2) detektiert.

## Beschreibung

Die vorliegende Erfindung betrifft eine Kabine für eine Landmaschine gemäß den Merkmalen des Oberbegriffs des Anspruchs 1.

Insbesondere bei Traktoren ist es Standard, Kabinen für den Bediener so komfortabel wie möglich zu gestalten. Dazu gehören zum Einen eine gute Schallisolierung und zum Anderen eine adäquate Belüftung. Da solche Maschinen oft in einer Umgebung betrieben werden, bei der relativ viel Staub oder andere Partikel in der Luft vorhanden sind, ist die Lüftung nicht nur darauf ausgelegt, einen ausreichenden Luftstrom bereitzustellen, sondern auch diesen aus der Umgebungsluft gezogenen Luftstrom so gut wie möglich zu filtern. Eine weitere Anforderung stellt die entsprechende Temperierung des Luftstroms dar.

Die oben genannten Bedingungen führen dazu, dass zeitgemäße Kabinen, über sehr kurze Zeiträume betrachtet, fast luftdicht sind. Mit anderen Worten gesagt, ist zwar der Austausch der Luft in der Kabine durch das Lüftungssystem gegeben, aber sehr schnelle Veränderungen der Luftdrucksituation in der Kabine können von der Lüftung nicht kompensiert werden. Eine solche Situation tritt auf, wenn eine Tür der Kabine schnell geschlossen wird. In diesem Fall bildet sich ein Luftpolster in der Kabine, wodurch die Schließbewegung der Tür aufgehalten wird. Die Tür muss also recht langsam und geführt geschlossen werden.

Dieses Problem wird beispielsweise in der WO 2010/049381 A1 oder der EP 0 070 636 A2 erwähnt. Die dortigen Filter bzw. Gummilippensysteme genügen jedoch den modernen Anforderungen an die Isolationsfähigkeit zum Schutz des Bedieners vor Umwelteinflüssen nicht.

Es ist im Stand der Technik bekannt, einen durch das Schließen der Tür hervorgerufenen erhöhten Luftdruck zur Reinigung von Filtern für Lufteinlässe von Lüftungsanlagen zu verwenden (beispielsweise US 2008/0014856 A1). Ein leichtgängiges und schnelles Schließen kann dadurch nicht erreicht werden, da das rückwärtige Durchströmen des Einlassfilters ebenfalls einen Rückstau erzeugen kann, welcher das Schließen der Tür behindert.

Aufgabe der Erfindung ist es eine Kabine für eine Landmaschine bereitzustellen, deren Tür trotz optimaler Kabinenisolierung leichtgängig und schnell geschlossen werden kann. Diese Aufgabe wird durch eine Kabine mit den Merkmalen des Anspruchs 1 gelöst.

Dies geschieht, indem ein Sensor zur Detektion der Stellung der Tür sowie ein mit dem Sensor verbundener Aktuator zur Betätigung einer Öffnungsvorrichtung, insbesondere eines Fensters, vorgesehen ist, wobei der Aktuator derart ausgebildet ist, dass er die Öffnungsvorrichtung öffnet, wenn der Sensor eine offene Stellung der Tür detektiert.

Mit anderen Worten wird durch das Öffnen der Öffnungsvorrichtung ein zweiter Weg für die Luft geöffnet, wodurch diese auch bei schnellem Schließen der Tür aus der Kabine entweichen kann. Dafür ist es notwendig, dass die Öffnungsvorrichtung ein im Wesentlichen ungehindertes Austreten der Luft ermöglicht.

Weitere vorteilhafte Ausführungen der Erfindung sind in den abhängigen Ansprüchen definiert.

Bevorzugt ist eine Ausführungsform, bei der der Aktuator einen elektrischen Antrieb sowie eine mit dem Antrieb und dem Sensor verbundene Steuer- oder Regeleinrichtung umfasst. Dies stellt zum Einen eine recht einfache technische Lösung dar und bietet den Vorteil, dass bei mehreren Öffnungsvorrichtungen eine modulare Steuer- oder Regeleinrichtung bzw. eine gemeinsame Steuer- oder Regeleinheit verwendet werden kann.

Um bei Schäden an dem System für einen Techniker eine einfache Fehlerdiagnose zu ermöglichen, kann es vorgesehen sein, dass die Steuer- oder Regeleinrichtung über eine Schnittstelle zur Übermittlung von Fehlersignalen an ein Diagnosegerät umfasst.

Besonders bevorzugt ist eine Ausführungsform, bei der der Aktuator derart ausgebildet ist, dass er die Öffnungsvorrichtung schließt, wenn der Sensor eine geschlossene Stellung der Tür detektiert. Dieses Schließen hat den Vorteil, dass die volle Isolationswirkung der Kabine nach dem Schließen der Tür wieder hergestellt ist.

Außerdem kann besonders bevorzugt vorgesehen sein, dass der Aktuator über eine Sicherheitsvorrichtung zum Erkennen erhöhter Last beim Schließen der Öffnungsvorrichtung verfügt, wobei der Aktuator derart ausgebildet ist, dass er bei durch die Sicherheitsvorrichtung erkannter erhöhter Last die Öffnungsvorrichtung öffnet. Denn das automatische Schließen der Öffnungsvorrichtung birgt eine erhöhte Gefahr einer Einklemmung von beispielsweise Körperteilen. Verletzungen durch Einklemmen kann also auf diese Weise vorgebeugt werden.

Da in den allermeisten Fällen schon öffenbare Fenster, insbesondere Klappfenster und/oder Schiebefenster, für die Kabinen vorgesehen sind, kann es vorteilhaft sein, diese als Öffnungsvorrichtung zu verwenden.

Eine besonders einfache Bauweise zur Detektion der Stellung der Tür stellt ein Kontaktsensor dar, wobei dieser vorzugsweise so ausgebildet ist, dass bei vollständig geschlossener Stellung der Tür ein geschlossener elektrischer Stromkreis vorliegt.

Aber auch die Verwendung eines Drehwinkelsensors ist denkbar. Hierdurch kann erreicht werden, dass die Öffnungsvorrichtung erst geöffnet wird, wenn ein voreingestellter, minimaler Öffnungswinkel erreicht wird.

Auch ein durch den Bediener aktives Öffnen oder Schließen der Öffnungsvorrichtung kann vorteilhaft sein. Hierzu kann je ein Taster zum Öffnen und zum Schließen der Öffnungsvorrichtung vorgesehen sein, welche mit dem Aktuator verbunden sind.

Insbesondere dann wenn im Dach der Kabine eine Öffnungsvorrichtung platziert sein soll, ist besonders bevorzugt ein mit dem Aktuator verbundener Regensensor vorgesehen, wobei der Aktuator derart ausgebildet ist, dass er bei durch den Regensensor detektiertem Regen die Öffnungsvorrichtung schließt.

Weitere Einzelheiten und Vorteile der Erfindung sind anhand der Figur sowie der dazugehörigen Figurenbeschreibung ersichtlich.

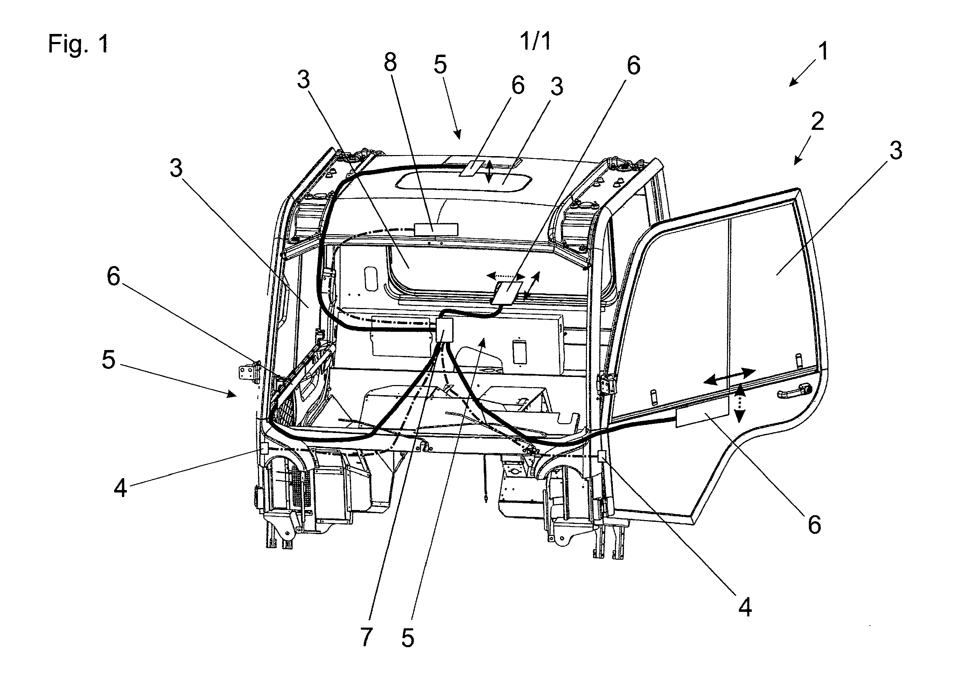

Figur 1 zeigt die erfindungsgemäße Kabine 1 in einer Vorderansicht. Dabei sind zunächst die Öffnungsvorrichtungen 3, welche in diesem Fall als Fenster ausgeführt sind, erkennbar. Diese liegen sowohl in den Türen 2 der Kabine 1 als auch an deren Oberseite und Rückseite.

Die Akuatoren 5 für die Öffnungsvorrichtungen 3 sind in diesem Fall als elektrische Antriebe 6 zusammen mit einer Steuer- oder Regeleinrichtung 7 ausgebildet. Der genaue Mechanismus zum Öffnen der Öffnungsvorrichtungen 3 ist beispielsweise durch Zahnstangen oder Spindeltriebe - jedenfalls gemäß bei Fachleuten bekannten Maßnahmen - gelöst.

Die Steuer- oder Regeleinrichtung 7 ist modular aufgebaut, d.h. es gibt für die Antriebe 6 jeweils analoge Untereinheiten. Verschiedene Betriebszustände (AUS, ÖFFNEN; SCHLIESSEN, FEHLER) der Steuer- oder Regeleinrichtung 7 werden über LEDs angezeigt. Weiterhin verfügt sie über einen Überspannungsund Verpolungsschutz sowie eine Sicherheitsabschaltung bei Übertemperatur.

Die Steuer- oder Regeleinrichtung 7 ist mit den beiden Sensoren 4 verbunden, welche in diesem Fall als Kontaktsensoren ausgebildet sind.

In regelmäßigen, kurzen Zeitabständen wird von den Sensoren 4 eine geöffnete oder eine geschlossene Stellung der Tür 2 an die Steuer- oder Regeleinrichtung 7 gemeldet. Befindet sich die Steuer- oder Regeleinrichtung 7 im automatischen Modus, veranlasst diese das Öffnen einer Öffnungsvorrichtung 3. Bei geschlossener Stellung, veranlasst die Steuer- oder Regeleinrichtung 7 das Schließen aller Öffnungsvorrichtungen 3.

Des Weiteren ist vorgesehen, dass der Bediener einzelne Fenster manuell öffnen oder schließen kann. Dafür wechselt die Steuer- oder Regeleinrichtung 7 in einen manuellen Modus, sobald ein (nicht dargestellter) Taster zum Öffnen oder Schließen eines Fensters vom Bediener gedrückt wird. Durch langes Drücken eines Tasters kann der Bediener die Steuer- oder Regeleinrichtung 7 in den oben beschriebenen automatischen Modus versetzen.

Außerdem ist ein Fehlermodus vorgesehen, der von der Steuer- oder Regeleinrichtung 7 aktiviert wird, wenn beispielsweise ein Taster klemmt und dadurch zu lange im gedrückten Zustand verharrt. Entsprechende Fehler-Codes werden dann in der Steuer- oder Regeleinrichtung 7 hinterlegt und können an einer CAN-Schnittstelle (Controller Area Network-Schnittstelle) ausgelesen werden. Dies kann beispielsweise durch einen Techniker mit Hilfe eines Diagnosegerätes geschehen.

Mit der Steuer- oder Regeleinrichtung 7 ist weiterhin ein Regensensor 8 verbunden. Detektiert dieser Regen, wird das Fenster an der Oberseite der Kabine 1 durch den entsprechenden Aktuator 5 geschlossen.

Die vorliegende Erfindung ist nicht auf das hier dargestellte Ausführungsbeispiel beschränkt. Beispielsweise können Sensoren 4 verwendet werden, die die genaue Winkelstellung der Tür 3 erfassen. Es könnte die Öffnungsvorrichtung 3 dann erst geöffnet werden, wenn tatsächlich eine (schnelle) Schließbewegung der Tür 2 auftritt.

## Patentansprüche

1. Kabine für eine Landmaschine, insbesondere einen Traktor, mit einer Tür (2) und einer Öffnungsvorrichtung (3), insbesondere einem öffenbaren Fenster, **dadurch gekennzeichnet, dass** ein Sensor zur Detektion der Stellung der Tür (2) sowie ein mit dem Sensor (4) verbundener Aktuator (5) zur Betätigung der Öffnungsvorrichtung (3) vorgesehen ist, wobei der Aktuator (5) derart ausgebildet ist, dass er die Öffnungsvorrichtung (3) öffnet, wenn der Sensor (4) eine offene Stellung der Tür (2) detektiert.

2. Kabine nach Anspruch 1, **dadurch gekennzeichnet, dass** der Aktuator (5) einen elektrischen Antrieb (6) sowie eine mit dem Antrieb (6) und dem Sensor (4) verbundene Steuer- oder Regeleinrichtung (7) umfasst.

3. Kabine nach Anspruch 2, **dadurch gekennzeichnet, dass** die Steuer- oder Regeleinrichtung (7) über eine Schnittstelle zur Übermittlung von Fehlersignalen an ein Diagnosegerät umfasst.

4. Kabine nach einem der Ansprüche 1 bis 3, **dadurch gekennzeichnet, dass** der Aktuator (5) derart ausgebildet ist, dass er die Öffnungsvorrichtung (3) schließt, wenn der Sensor (4) eine geschlossene Stellung der Tür (2) detektiert.

5. Kabine nach Anspruch 4, **dadurch gekennzeichnet, dass** der Aktuator (5) über eine Sicherheitsvorrichtung zum Erkennen erhöhter Last beim Schließen der Öffnungsvorrichtung (3) verfügt, wobei der Aktuator (5) derart ausgebildet ist, dass er bei durch die Sicherheitsvorrichtung erkannter erhöhter Last die Öffnungsvorrichtung (3) öffnet.

6. Kabine nach einem der Ansprüche 1 bis 5, **dadurch gekennzeichnet, dass** die Öffnungsvorrichtung (3) als Klappfenster und/oder als Schiebefenster ausgebildet ist.

7. Kabine nach einem der Ansprüche 1 bis 6, **dadurch gekennzeichnet, dass** der Sensor (4) als Kontaktsensor ausgebildet ist, wobei vorzugsweise bei vollständig geschlossener Stellung der Tür (2) ein geschlossener elektrischer Stromkreis vorliegt.

8. Kabine nach einem der Ansprüche 1 bis 6, **dadurch gekennzeichnet, dass** der Sensor (4) als Drehwinkelsensor ausgebildet ist.

9. Kabine nach einem der Ansprüche 1 bis 8, **dadurch gekennzeichnet, dass** je ein Taster zum Öffnen und zum Schließen der Öffnungsvorrichtung (3) vorgesehen ist, welche mit dem Aktuator (5) verbunden sind.

10. Kabine nach einem der Ansprüche 1 bis 9, **dadurch gekennzeichnet, dass** ein mit dem Aktuator (5) verbundener Regensensor (8) vorgesehen ist, wobei der Aktuator (5) derart ausgebildet ist, dass er bei durch den Regensensor (8) detektiertem Regen die Öffnungsvorrichtung (3) schließt.
